# EUROPÄISCHE PATENTSCHRIFT

(11) **EP 2 202 599 B1**
(45) Veröffentlichungstag und Bekanntmachung des Hinweises auf die Patenterteilung: **29.07.2020**
(21) Anmeldenummer: 09013799.3
(22) Anmeldetag: 03.11.2009
(51) Int. Cl.: G05B 19/418

(54) **Vernetzte Industriesteuerung und Verfahren zum Wechsel des Betriebsmodus einer solchen Industriesteuerung**
Networked industrial control and method for changing the operation mode of the same
Commande industrielle en réseau et procédé d'échange du mode de fonctionnement d'une telle commande industrielle

(30) Priorität: 23.12.2008 DE 102008062934
(43) Veröffentlichungstag der Anmeldung: 30.06.2010
(73) Patentinhaber: KUKA Deutschland GmbH, 86165 Augsburg (DE)
(72) Erfinder: Finsterwalder, Thomas, 86316 Friedberg (DE)
(74) Vertreter: Schlotter, Alexander Carolus Paul

(56) Entgegenhaltungen:
- EP-A1- 1 545 052
- WO-A2-2007/104152
- DE-A1- 10 049 344
- US-A- 6 047 378
- US-A1- 2005 182 977
- US-A1- 2008 302 200
- US-B1- 6 311 276
- US-B1- 6 901 298

## Beschreibung

Die vorliegende Erfindung betrifft ein Verfahren zum Wechsel des Betriebsmodus von miteinander vernetzten Robotersteuerungen, sowie eine Robotersteuerung, die zur Durchführung eines solchen Verfahrens eingerichtet ist.

Heutige Industrieroboter arbeiten häufig im Verbund, beispielsweise in einer Fertigungsstraße oder dergleichen. Dabei weist jeder Roboter eine eigene Robotersteuerung auf, die beispielsweise über Ethernet miteinander kommunizieren können. Insbesondere solche Robotersteuerungen, aber auch Steuerungen anderer automatisierter Industrieanlagen, beispielsweise Steuerungen eines Schweiß-, Spann- oder Klebeprozesses, die vorliegend verallgemeinert als Industriesteuerungen bezeichnet werden, werden nach betriebsinterner Praxis zunehmend PC-basiert realisiert, i.e. unter Verwendung industrietauglicher PCs, wie beispielsweise die DE 200 04 370 U1 oder die DE 103 04 706 A1 der Anmelderin lehren.

Um eine solche Industriesteuerung stillzusetzen, i.e. in einen inaktiven Betriebsmodus zu überführen, wird bisher ein Hauptschalter der Steuerung betätigt, mit der die Industriesteuerung komplett von einer externen Energieversorgung getrennt wird. Durch erneutes Betätigen des Hauptschalters wird die Industriesteuerung wieder mit der externen Energieversorgung verbunden und dadurch in einen aktiven Betriebsmodus überführt.

Hierbei kann die Industriesteuerung bei Verbindung mit der Energieversorgung einen kompletten System- oder Neustart durchführen, bei dem einzelne Komponenten neu kalibriert oder initialisiert werden. Wahlweise kann die Industriesteuerung bei Trennung von der externen Energieversorgung auch zunächst aktuelle Daten in einem sogenannten "freeze file" abspeichern. Wird die Industriesteuerung dann wieder mit der externen Energieversorgung verbunden, wird auf diese abgespeicherten Daten zugegriffen, so dass kein kompletter System- oder Neustart durchgeführt werden muss. Dies verkürzt die Zeit zur Wiederinbetriebnahme einer Industriesteuerung bzw. eines von ihr gesteuerten Roboters.

Da die Deaktivierung bisher stets durch Betätigung des Hauptschalters, i.e. unter kompletter Trennung von der externen Energieversorgung eingeleitet wird, erfolgt die anschließende Stillsetzung und insbesondere die Abspeicherung der Daten mit Hilfe von Akkumulatoren der Industriesteuerung. Nachteilig belastet somit jede Stillsetzung einer Industriesteuerung ihre Energiespeicher und kann so deren Lebensdauer verkürzen. Zudem beeinträchtigt ein beschädigter oder nicht ausreichend geladener Energiespeicher das kontrollierte Stillsetzen und insbesondere die Abspeicherung aktueller Daten in dem freeze file.

Die DE 100 49 344 A1 betrifft einen Roboter mit einem Energiesparmodus. Dabei wird von einem bewegungsfähigen Roboter ausgegangen, der auf einem Wagen montiert ist. Der Roboter umfasst eine Überwachungsvorrichtung, die einen Zustand überwacht. Im Fall eines Eingriffs der Überwachungsvorrichtung wird der Roboter angehalten. Dabei wird er in einen Energiesparmodus versetzt und es wird eine Zufuhr von Energie aus der Batterie zu wenigstens den Antriebsmotoren unterbrochen.

Die WO 2007/104152 A2 betrifft ein Funk-Empfänger-Steuerungsmodul und ein drahtloses Steuerungssystem zur Langstreckenfrequenzübertragung. Ziel ist es, eine Langstreckenübertragung per Funk zum Steuern einer Bewässerungsanlage zu verbessern. Dazu wird ein drahtloses Steuerungssystem zur Steuerung einer Mehrzahl von Geräten über eine zentrale Steuerung vorgeschlagen. Die drahtlosen Übertragungssignale können Daten zur Ansteuerung eines Energiemanagementsystems enthalten, wenn ein solches auf einzelnen Verbrauchern vorhanden ist. Die US 6,901,298 B1 betrifft das Speichern und Wiederherstellen eines Steuerungszustandes in einem offenen Betriebssystem. Ziel ist es, einen Zustand einer Industriesteuerung Speichern und Wiederherstellen zu können. Dazu wird ein Hybernate-Modus vorgeschlagen, bei dem ein Abbild der Steuerung von einem Flash-Speicher zu einem RAM-Speicher kommuniziert und dort gespeichert wird, wenn bei der Steuerung eine Energiereduktion durchgeführt wird.

Die EP 1 545 052 A1 betrifft ein Verfahren zum Aufwecken von abgeschalteten Geräten in einem Netzwerk. Ziel ist es, eine Mehrzahl von am Netzwerk befindlichen Geräten im Ruhezustand gleichzeitig aufwecken zu können. Dazu wird vorgeschlagen, die Geräte über ein Netzwerk miteinander zu verbinden. Diese Verbindung kann insbesondere drahtgebunden und/oder drahtlos erfolgen.

Die US 6,311,276 B1 betrifft ein Sicherheitssystem zur ferngesteuerten Koordination und zur Kommunikation von Wecksignalen. Dazu wird von einem Magic-Paket ausgegangen, welches in einem Netzwerk versendet wird, und von Endgeräten identifiziert werden kann, so dass diese einen Ruhezustand beenden und aufwachen. Ziel ist es, eine sichere Weck-Funktion oder ein sicheres Leistungsmanagement zur Verfügung zu stellen. Dazu wird vorgeschlagen, über eine Logik Inhalte von Paketen zu überprüfen und Pakete, welche nicht identifizierbar sind, zu verwerfen.

Die US 6,047,378 A betrifft ein mehrfaches Wecken von Endgeräten über ein Netzwerk. Ziel ist es, mehrere Endgeräte über ein Netzwerk aus einem Ruhezustand zu wecken. Dazu wird ein entsprechendes Paket offenbart, welches die Zieladresse eines Endgerätes und/oder die Zieladresse mehrerer Endgeräte umfasst.

Das Dokument US 2005/182977 A1 betrifft ein Netzwerk von Vorrichtungen (die auch Roboter sein können) beinhaltend Zustandsautomaten, die im Hochenergiezustand und Niederenergiezustand wechseln können, wobei der Niederenergiezustand einen der folgenden Zustände aufweist: "Standby"; "zeitweilig unterbrochen"; "Hybernate", "Schlaf"; "Tiefschlaf" oder "Aus". Die D7 offenbart zusätzlich eine Statusmanagement- Komponente, die einkommende Signale überwacht und bei Erhalt eines Signals entscheidet, ob das Signal zur Verarbeitung an einen Niederenergie-Coprozessor versendet wird oder die entsprechende Vorrichtung "geweckt" wird, um dieses Signal zu verarbeiten.

Aufgabe der vorliegenden Erfindung ist es, das Wechseln des Betriebsmodus wenigstens einer von mehreren miteinander vernetzten Industriesteuerungen zur Steuerung automatisierter Industrieanlagen, insbesondere von Robotern, zu verbessern.

Diese Aufgabe wird durch ein Verfahren mit den Merkmalen des Anspruchs 1 bzw. eine Robotersteuerung mit den Merkmalen des Anspruchs 9 gelöst. Anspruch 10, 11 stellen ein entsprechendes Computerprogramm bzw. Computerprogrammprodukt, insbesondere ein Speichermedium oder Datenträger, unter Schutz, die Unteransprüche betreffen vorteilhafte Weiterbildungen.

Erfindungsgemäß wird zum Wechsel des Betriebsmodus einer oder mehrerer miteinander vernetzter Robotersteuerungen, zunächst ein erstes Datenpaket über ein Netzwerk der miteinander vernetzten Robotersteuerungen versandt.

Insbesondere, wenn eine oder mehrere dieser Steuerungen PC-basiert sind, ist das Netzwerk vorzugsweise Ethernet-basiert und basiert bevorzugt auf PROFINET, dem Ethernet IP von Rockwell oder einem anderen industriellen Ethernet-Standard für die Automatisierung. Ein mögliches Ethernet-Protokoll ist beispielsweise in der IEEE-Norm 802.3 standarisiert.

Empfängt eine Empfangseinrichtung, beispielsweise ein Netzwerk-Controller oder eine Netzwerk-Karte, einer Robotersteuerung ein solches erstes Datenpaket so wechselt die Robotersteuerung von einem ersten in einen zweiten Betriebsmodus, sofern das erste Datenpaket an diese Robotersteuerung adressiert ist.

Bei dem ersten Datenpaket kann es sich beispielsweise um ein sogenanntes "Magic Packet" handeln. Das Datenpaket kann zum Beispiel einen lokal oder global eindeutigen, dieser Robotersteuerung zugeordneten Schlüssel, i.e. einen sogenannten MAC-Schlüssel, umfassen, indem beispielsweise nach einer einleitenden Kennzeichnung als erstes Datenpaket anschließend dieser MAC-Schlüssel, vorzugsweise ununterbrochen, für eine vorgegebene Anzahl wiederholt wird. Eine Gruppe von Robotersteuerungen kann beispielsweise adressiert werden, indem anstelle eines nur einer Robotersteuerung zugeordneten Schlüssels ein Schlüssel verwendet wird, der der gewünschten Gruppe zugeordnet ist, wobei die Empfangseinrichtung jeder Robotersteuerung aus dieser Gruppe aufgrund der Gruppenzugehörigkeit erkennt, dass (auch) die eigene Robotersteuerung adressiert ist. Gleichermaßen kann beispielsweise das erste Datenpaket einen Schlüssel umfassen, der allen MAC-Schlüsseln der Gruppe gemeinsam ist, etwa einen übereinstimmenden Teil der MAC-Schlüssel, oder es können alle Robotersteuerungen der Gruppe einzeln parallel oder nacheinander adressiert werden. In dem ersten und dem zweiten Betriebsmodus werden unterschiedliche Gruppen von Komponenten der Robotersteuerung mit Energie versorgt, vorzugsweise, indem sie mit einer externen Energieversorgung verbunden bzw. von dieser getrennt werden.

Erfindungsgemäß kann einer von dem ersten und dem zweiten Betriebsmodus ein Energiesparmodus der Robotersteuerung sein, in dem, vorzugsweise im Wesentlichen ausschließlich, die Empfangseinrichtung zum Empfangen von Datenpaketen weiter mit Energie versorgt wird, und eine Gruppe von anderen Komponenten der Industriesteuerung, vorzugsweise die Mehrzahl ihrer Komponenten, nicht mit Energie versorgt werden, während der andere von dem ersten und dem zweiten Betriebsmodus ein aktiver oder Normalbetriebsmodus sein kann, in dem sowohl die Empfangseinrichtung als auch diese Gruppe von anderen Komponenten der Industriesteuerung mit Energie versorgt werden. Solche anderen Komponenten können beispielsweise Laufwerke, Lüfter, Platinen, Ein- und/oder Ausgabeeinrichtungen wie Monitore, Anzeigen, Tastaturen, Bedienhandgerätes, CPUs und dergleichen sein. Durch Wechsel in einen solchen Energiesparmodus kann der Energieverbrauch vorteilhaft gesenkt werden.

Eine Robotersteuerung im Sinne der vorliegenden Erfindung kann auch einen oder mehrere Antriebe, insbesondere Elektromotoren, beispielsweise die Antriebsmotoren eines oder mehrerer Manipulatoren, umfassen. Insofern ist es auch möglich, dass in einem anderen Energiesparmodus im Wesentlichen nur ein oder mehrere, insbesondere alle Antriebe der Robotersteuerung von einer Energieversorgung getrennt werden, während die übrigen Komponenten der Robotersteuerung, beispielsweise Laufwerke, Lüfter, Platinen, Rechen- und Speichereinheiten, Ein- und/oder Ausgabeeinrichtungen und insbesondere die Empfangseinrichtung mit Energie versorgt werden. Hierdurch kann auch in diesem anderen Energiesparmodus eine Sicherheits-Steuerung aktiv bleiben.

In einer bevorzugten Weiterbildung kann wahlweise zwischen mehr als zwei Betriebsmodi gewechselt werden, insbesondere zwischen einem Normalbetriebsmodus, einem Energiesparmodus, in dem im Wesentlichen ausschließlich die Empfangseinrichtung weiter mit Energie versorgt wird, und einem anderen Energiesparmodus, in dem im Wesentlichen nur Antriebe von einer Energieversorgung getrennt sind. Dabei kann durch Versenden eines ersten Datenpaketes wahlweise, zum Beispiel aus dem Normalbetriebsmodus oder dem anderen Energiesparmodus, in den Energiesparmodus oder durch Versenden eines anderen ersten Datenpaketes, zum Beispiel aus dem Normalbetriebsmodus oder dem Energiesparmodus, in den anderen Energiesparmodus gewechselt werden. Zusätzlich kann es in einem oder mehreren Energiesparmodi vorgesehen sein, eine oder mehrere Bremsen der von der Robotersteuerung gesteuerten automatisierten Industrieanlage zu schließen, beispielsweise Bremsen eines Roboters zu aktivieren, und/oder einen oder mehrere Verbraucher dieser Industrieanlage, beispielsweise Antriebe eines Roboters, nicht mit Energie zu versorgen, indem sie zum Beispiel von einer externen Energieversorgung getrennt werde, um den Energieverbrauch in diesem Modus weiter zu reduzieren.

Somit können in einer bevorzugten Ausführung durch Versenden eines ersten Datenpakets, insbesondere eines Magic Packets, eine oder mehrere miteinander vernetzte Roboter- oder andere Industriesteuerungen von einem aktiven in einen Energiesparmodus überführt werden, in dem nur noch ein Teil der Komponenten, insbesondere eine Empfangseinrichtung zum Empfangen von weiteren Datenpaketen, mit Energie versorgt wird.

Vorteilhafterweise bleiben dabei ein oder mehrere Komponenten der Steuerung wenigstens für eine gewisse Zeit weiterhin mit einer externen Energieversorgung verbunden. Dies ermöglicht es insbesondere, im Gegensatz zu der bisherigen kompletten Trennung durch Betätigen eines Hauptschalters und der damit verbundenen Abspeicherung eines freeze files unter Belastung eines steuerungseigenen Energiespeichers, die Steuerung, die weiterhin mit der externen Energieversorgung verbunden bleibt, mittels Energie aus der externen Energieversorgung herunterzufahren und dabei insbesondere aktuelle Daten abzuspeichern, was steuerungseigene Energiespeicher wie Akkumulatoren schont und somit deren Lebensdauer verlängern kann. Beim Wechseln aus dem Energiespar- in einen aktiven Betriebsmodus kann dann auf diese abgespeicherten Daten zugegriffen und so die Zeit zur Wiederinbetriebnahme verkürzt werden.

Der Energiesparmodus kann insbesondere ein sogenannter Hybernate-Betriebsmodus sein, in dem eine Empfangseinrichtung der Robotersteuerung zum Empfangen von Datenpaketen mit einer externen Energieversorgung verbunden bleibt und aktuelle Daten in einem freeze file bzw. Initialisierungsdatensatz abgespeichert sind, auf den bei Wiederinbetriebnahme der Robotersteuerung zugegriffen wird.

Erfindungsgemäß werden durch Versenden eines zweiten Datenpakets, insbesondere eines Magic Packets, eine oder mehrere miteinander vernetzte Robotersteuerungen von einem Energiesparmodus in einen aktiven Betriebsmodus überführt, in dem insbesondere auch Steuerungskomponenten mit Energie versorgt werden, die in dem Energiesparmodus nicht dauernd mit Energie versorgt werden. Ist in einem Energiesparmodus vorgesehen, eine oder mehrere Bremsen der von der Robotersteuerung gesteuerten automatisierten Industrieanlage zu schließen und/oder einen oder mehrere Verbraucher dieser Industrieanlage von einer Energieversorgung zu trennen, so werden bevorzugt auf Basis des zweiten Datenpaketes die Bremsen geöffnet bzw. die Verbraucher wieder mit Energie versorgt.

Das zweite Datenpaket kann mit dem ersten Datenpaket identisch sein oder sich von diesem unterscheiden. Insbesondere kann es sich bei dem ersten und/oder zweiten Datenpaket jeweils um ein Wake on LAN-Paket handeln, wie es beispielsweise aus der DE 20 2005 001 650 U1, der DE 10 2005 027 387 A1 oder der EP 0 777 172 B1 bekannt ist.

Die Überführung von einem ersten in einen zweiten Betriebsmodus, also beispielsweise in einen Energiesparmodus oder einen aktiven bzw. Normalbetriebsmodus, ermöglicht vorteilhaft die gezielte Stillsetzung bzw. Wiederinbetriebnahme einzelner Robotersteuerungen oder Gruppen von Robotersteuerungen. Im Gegensatz zur bisherigen Praxis müssen dazu vorteilhafterweise nicht mehr manuell einzelnd die Hauptschalter der jeweiligen Steuerungen betätigt werden. Dies erhöht deutlich die Flexibilität der vernetzten Robotersteuerungen bzw. der von ihnen gesteuerten automatisierten Prozesse bzw. Industrieanlagen. So kann beispielsweise zur Anpassung an wechselnde Kapazitäten oder zu Wartungszwecken ein Teil einer automatisierten Fertigung, beispielsweise eine von mehreren Fertigungsstraßen oder -zweigen, über das Netz stillgesetzt bzw. aktiviert werden. Wird in einer bevorzugten Ausführung eine ganze Reihe von Steuerungen gestaffelt nacheinander aktiviert bzw. deaktiviert, können dadurch Spitzen im Wiederanlauf- bzw. Stillsetzungs-Strom geglättet werden.

Ein erstes bzw. zweites Datenpaket kann dabei, wie vorstehend beschrieben, direkt an eine Robotersteuerung oder eine Gruppe von Robotersteuerungen adressiert werden, indem es beispielsweise als Magic Packet einen entsprechenden Schlüssel umfasst. Insbesondere, um einen kompletten Verbund von Industrieanlagen, beispielsweise eine Halle miteinander vernetzter Industrieroboter, stillzusetzen oder wieder in Betrieb zu nehmen, kann ein erstes bzw. zweites Datenpaket auch als Broadcast an alle miteinander vernetzten Robotersteuerungen adressiert werden.

Ein Datenpaket kann beispielsweise von einer Gruppensteuerung, insbesondere einer Linien-SPS ("SpeicherProgrammierbare Steuerung"), der miteinander vernetzten Robotersteuerungen gesendet werden. Zusätzlich oder alternativ ist es auch möglich, es von einer Robotersteuerung der miteinander vernetzten Robotersteuerungen zu senden, indem beispielsweise einzelne oder alle Robotersteuerungen entsprechende Softwaremodule aufweisen.

In einer bevorzugten Ausführung kann eine Robotersteuerung nicht nur nach Empfang eines ersten Datenpaketes über das Netz, sondern zusätzlich auch auf Basis einer Eingabe an einer Eingabeeinrichtung der Robotersteuerung von dem ersten in den zweiten Betriebsmodus wechseln. Beispielsweise kann hierzu eine Fernbedienung oder ein sogenanntes Bedienhandgerät, wie es etwa zum Teachen bei Robotern verwendet wird, ein entsprechende Eingabemöglichkeit, beispielsweise einen Schalter oder einen Steuerbefehl, aufweisen. Betätigt der Bediener diese Eingabemöglichkeit, etwa durch Betätigen des Schalters oder Eingabe des entsprechenden Steuerbefehls, wechselt die Robotersteuerung ebenfalls in den zweiten Betriebsmodus, beispielsweise einen Energiesparmodus. Hierdurch wird die Flexibilität und die Redundanz vorteilhaft weiter erhöht und insbesondere auch eine Eingabe direkt vor Ort ermöglicht.

Eine Robotersteuerung kann entsprechend auch auf Basis einer Eingabe an der Eingabeeinrichtung von einem Energiesparmodus in einen aktiven Modus wechseln. Eine Robotersteuerung kann in einer bevorzugten Ausführung zusätzlich oder alternativ auch dadurch in einen ersten Betriebsmodus, beispielsweise einen aktiven Modus wechseln, indem die Empfangseinrichtung mit einer externen Energieversorgung verbunden wird. Wurde beispielsweise durch Empfang des Datenpakets oder Eingabe an der Eingabeeinrichtung in den Energiesparmodus gewechselt und vorzugsweise aktuelle Daten in einem freeze file abgespeichert, während wenigstens die Empfangseinrichtung mit einer externen Energieversorgung verbunden bleibt, kann anschließend durch Ausschalten eines Hauptschalters wie bei dem bisher bekannten Verfahren ein komplett von der Energieversorgung getrennter Betriebsmodus herbeigeführt werden. Unabhängig davon, ob dieser wie bisher durch direktes Betätigen des Hauptschalters, i.e. mit Abspeicherung des freeze files unter Belastung steuerungseigener Energiespeicher, oder nach erfindungsgemäßem Wechsel in den Energiesparmodus unter Abspeicherung des freeze files mittels

Energie aus einer externen Energieversorgung, herbeigeführt wurde, kann dann durch Einschalten des Hauptschalters wieder in den aktiven Betriebsmodus gewechselt werden.

Weitere Vorteile und Merkmale ergeben sich aus den Unteransprüchen und den Ausführungsbeispielen. Hierzu zeigt, teilweise schematisiert:
- Fig. 1:: zwei miteinander vernetzte Robotersteuerungen nach einer Ausführung der vorliegenden Erfindung; und
- Fig. 2:: ein Zustandsdiagramm eines Verfahrens nach einer Ausführung der vorliegenden Erfindung.

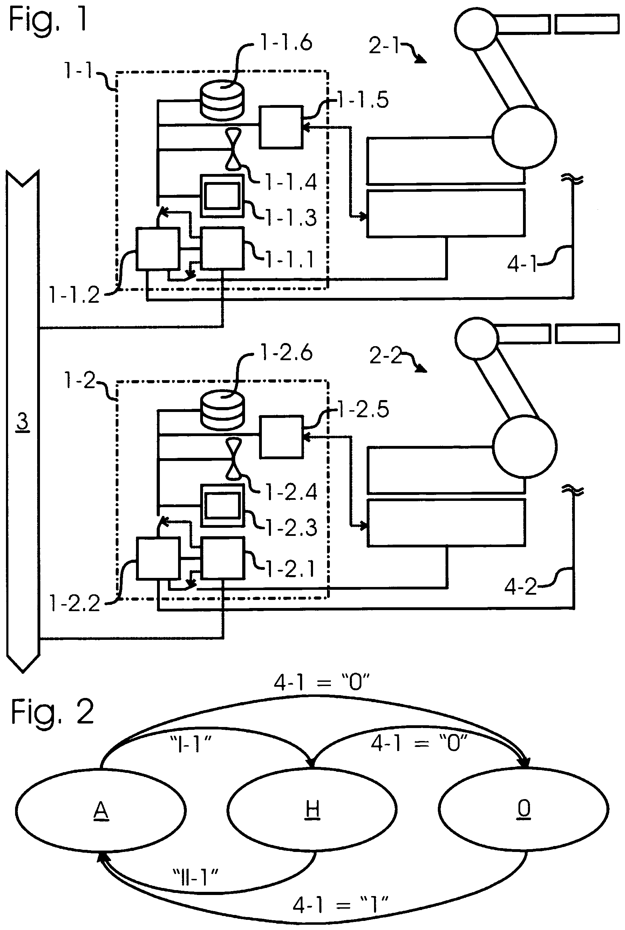

Fig. 1 zeigt zwei Industrieroboter 2-1, 2-2, deren PC-basierte Robotersteuerungen 1-1 bzw. 1-2 über ein Ethernet 3 miteinander vernetzt sind. Eine Fertigungsstraße kann weitere Roboter oder andere automatisierte Industrieanlagen, beispielsweise Spann-Schweiß- oder Klebevorrichtungen umfassen (nicht dargestellt), deren Industriesteuerungen ebenfalls über das Ethernet 3 vernetzt sind.

Die beiden Robotersteuerungen 1-1, 1-2 umfassen jeweils eine Empfangseinrichtung in Form eines Netzwerk-Controllers 1-i.1 (i = 1, 2) zum Empfangen von Datenpaketen über das Ethernet 3, sowie ein Netzteil 1-i.2, das mit einer externen Energieversorgung 4-i verbunden ist und den Netzwerk-Controller 1-i.1 sowie weitere Komponenten der jeweiligen Steuerung 1-i mit Energie versorgt, insbesondere eine Ein-/Ausgabeeinrichtung 1-i.3, einen Lüfter 1-i.4, eine Steuerungs-CPU 1-i.5 für den Roboter 2-i, sowie ein Laufwerk 1-i.6. Wie in Fig. 1 durch einen punktierten Pfeil angedeutet, kann der Netzwerk-Controller 1-i.1 die Energieversorgung zwischen Netzteil 1-i.2 und weiteren Steuerungskomponenten 1-i.j (j = 3, 4, ...6) unterbrechen.

In Fig. 2 ist der Ablauf eines erfindungsgemäßen Verfahrens in Form eines sogenannten Zustandsdiagramms (Petri-Netz oder Zustandsautomat) dargestellt, in dem Ellipsen Betriebsmodi und Pfeile Wechsel zwischen diesen Betriebsmodi bezeichnen, wobei das Ereignis, das einen Wechsel auslöst, bei dem Pfeil vermerkt ist.

Nachfolgend wird ein erfindungsgemäßes Verfahren anhand der Robotersteuerung 1-1 erläutert, wobei in analoger Weise zusätzlich oder alternativ auch die Robotersteuerung 1-2 und/oder weitere, nicht dargestellte Steuerungen arbeiten.

Zunächst befinde sich die Robotersteuerung 1-1 in einem ersten, aktiven oder Normalbetriebsmodus "A" (links in Fig. 2), in dem alle Komponenten 1-1.1, 1-1.3 bis 1-1.6 sowie Antriebe des Roboters 2-1 (nicht dargestellt) über das Netzteil 1-1.2 durch die externe Energieversorgung 4-1 mit Energie versorgt werden. In einer nicht dargestellten Abwandlung ist es ebenso möglich, die Antriebe des Roboters 2-1 über ein separates Netzteil mit Energie zu versorgen.

Soll nun beispielsweise gezielt der Roboter 2-1 und seine Steuerung 1-1, beispielsweise zu Wartungszwecken oder zur Reduzierung der Fertigungskapazität stillgesetzt werden, kann nach bisheriger Praxis durch Ausschalten eines Hauptschalters (nicht dargestellt) die Steuerung 1-1 komplett von der Energieversorgung 4-1 getrennt werden. Durch dieses als "4-1 = ,0'" gekennzeichnete Ereignis wechselt die Steuerung in einen komplett von der Energieversorgung 4-1 getrennten dritten Betriebsmodus "0" (rechts in Fig. 2).

Nachteilig muss hierzu manuell der Hauptschalter betätigt werden, was insbesondere bei einer Mehrzahl stillzusetzender Roboter, etwa in einer (teil)automatisierten Fertigung, aufwändig ist.

Um eine komplette Neukalibrierung und -initialisierung bei Wiederinbetriebnahme zu vermeiden, ist vorgesehen, dass bei Verlassen des Normalbetriebsmodus "A" aktuelle Daten, beispielsweise Kalibrier- und Initialisierungsdaten, in einem freeze file abgespeichert werden, auf das bei Wiederaufnahme des Betriebes zugegriffen wird. Nachteilig muss dies bei der herkömmlichen Trennung von der externen Energieversorgung 4-1 durch manuelles Betätigen des Hauptschalters ("4-1 = '0'") unter Belastung steuerungseigener, interner Akkumulatoren (nicht dargestellt) erfolgen.

Daher ist erfindungsgemäß zusätzlich zu obiger Möglichkeit nun vorgesehen, im Ethernet 3 ein erstes Datenpaket in Form eines Magic Packets I-1 zu versenden. Dieses enthält beispielsweise sechs Mal in Folge den hexadezimalen Wert "FF", unmittelbar gefolgt von einer ununterbrochenen sechszehnmaligen Wiederholung der 48-bit MAC-Adresse der Robotersteuerung 1-1.

Der Netzwerk-Controller 1-1.1 erkennt aufgrund dieser Adressierung das Magic Packet und überführt die Steuerung 1-1 in einen zweiten Betriebsmodus, einen Energiespar- oder Hybernate-Betriebsmodus "H" (Mitte in Fig. 2), in dem der Netzwerk-Controller 1-1.1 die Energieversorgung der Ein-/Ausgabeeinrichtung 1-1.3, des Lüfters 1-1.4, der Steuerungs-CPU 1-1.5 für den Roboter 2-1 sowie des Laufwerks 1-1.6 durch das Netzteil 1-1.2 unterbricht, nachdem die aktuellen Daten in dem freeze file abgespeichert, Bremsen des Roboters 2-1 geschlossen und Antriebsmotoren des Roboters 2-1 von der externen Stromversorgung 4-1 getrennt worden sind, wie ebenfalls durch einen punktierten Pfeil in Fig. 1 angedeutet. In diesem Hybernate-Betriebsmodus "H" wird somit kaum Energie verbraucht, insbesondere gegenüber dem dritten Betriebsmodus "0" lediglich die Energie des Netzwerk-Controllers 1-1.1, welcher aktiv bleibt, um weitere Datenpakete zu empfangen.

Vorteilhaft bleibt bei dem Wechsel aus dem aktiven Betriebsmodus "A" die Robotersteuerung 1-1 als solche weiterhin mit der externen Energieversorgung 4-1 verbunden, so dass beim Wechseln die Akkumulatoren der Steuerung 1-1 nicht wie bei der vorstehend erläuterten bisherigen Praxis belastet werden. Zudem ist es möglich, die Robotersteuerung 1-1 gezielt über das Ethernet 3 und somit beispielsweise mittels einer Linien-SPS (nicht dargestellt) stillzusetzen, ohne wie bei der vorstehend erläuterten bisherigen Praxis manuell einen Hauptschalter zu betätigen.

Durch Versenden eines weiteren Magic Packtes II-1, das identisch mit dem oben beschriebenen ersten Datenpaket ist, über das Ethernet 3 wird die Robotersteuerung 1-1 wieder in den aktiven Betriebsmodus "A" überführt. Hierzu erkennt der Netzwerk-Controller 1-1.1, der auch im Hybernate-Betriebsmodus "H" durch das Netzteil 1-1.2 mit Energie versorgt wird, das an die Steuerung 1-1 adressierte Magic Packet II-1 und bewirkt die Versorgung der Ein-/Ausgabeeinrichtung 1-1.3, des Lüfters 1-1.4, der Steuerungs-CPU 1-1.5 für den Roboter 2-1 sowie des Laufwerks 1-1.6 durch das Netzteil 1-1.2, die Initialisierung auf Basis der im freeze file abgespeicherten Daten, die Versorgung der Antriebsmotoren des Roboters 2-1 durch die externe Stromversorgung 4-1 sowie das Lösen seiner Bremsen.

Wird in einer nicht dargestellten Abwandlung zusätzlich an die Steuerung 1-2 adressierte Magic Packtes oder Magic Packets über das Ethernet 3 gesendet, die sowohl von dem Netzwerk-Controller 1-1.1 als auch von dem Netzwerk-Controller 1-2.1 als an die eigene Steuerung adressiert erkannt werden, kann zusätzlich die Steuerung 1-2 in einen Hybernate-Betriebsmodus versetzt bzw. wieder in den aktiven Betriebsmodus überführt werden. Entsprechend ist eine gezielte Stillsetzung bzw. Inbetriebnahme verschiedener Industriesteuerungen oder Gruppen von Industriesteuerungen möglich. Gleichermaßen können durch Versenden eines Broadcast Magic Packtes parallel oder nacheinander alle miteinander über das Ethernet 3 vernetzte Industriesteuerungen stillgesetzt bzw. in Betrieb genommen werden.

In Fig. 2 ist eine zusätzliche Möglichkeit dargestellt, die Robotersteuerung 1-1 manuell wieder in den aktiven Betriebsmodus zu überführen. Nachdem die Steuerung 1-1, wie vorstehend beschrieben auf Basis eines Magic Packets I-1, oder in einer nicht dargestellten Ausführung mittels Eingabe eines entsprechenden Befehls an einem Bedienhandgerät der Steuerung 1-1, wie es beispielsweise zum Teachen des Roboters 2-1 eingesetzt wird, in den Hybernate-Betriebsmodus "H" überführt worden ist, wird kurzfristig der Hauptschalter der Steuerung 1-1 ausgeschaltet und die Steuerung 1-1 komplett von der externen Energieversorgung 4-1 getrennt ("4-1 = '0'"). Wird danach der Hauptschalter wieder eingeschaltet ("4-1 = '1'"), kehrt die Steuerung 1-1 unabhängig davon, wie sie in den dritten, komplett von der externen Energieversorgung getrennten Betriebsmodus "0" gelangt ist, in den aktiven Betriebsmodus "A" zurück. Bei Wechsel in diesen Betriebsmodus wird zunächst geprüft, ob ein gültiges freeze file vorliegt. Ist dies der Fall, wird der Roboter 2-1 und seine Robotersteuerung 1-1 auf Basis der im freeze file abgespeicherten Daten in einem sogenannten Warmstart aktiviert, insbesondere initialisiert. Liegt kein gültiges freeze file vor, wenn in den aktiven Betriebsmodus "A" gewechselt wird, so erfolgt ein sogenannter Kaltstart, bei dem die Steuerung 1-1 komplett gebootet und Steuerung 1-1 und Roboter 2-1 komplett kalibriert und initialisiert werden.

In einer nicht separat dargestellten Abwandlung sind auch die Antriebe der Roboter 2-1, 2-2 Teil der Industriesteuerung 1-1 bzw. 1-2. Wird in der Abwandlung im Ethernet 3 ein anderes erstes Datenpaket in Form eines Magic Packets versandt, das beispielsweise sechs Mal in Folge den hexadezimalen Wert "EE", unmittelbar gefolgt von einer ununterbrochenen sechszehnmaligen Wiederholung der 48-bit MAC-Adresse der Robotersteuerung 1-1 enthält, erkennt der Netzwerk-Controller 1-1.1 aufgrund dieser Adressierung das Magic Packet und überführt die Steuerung 1-1 in einen anderen Energiespar-Betriebsmodus, in dem der Netzwerk-Controller 1-1.1 nur die Energieversorgung der Antriebe des Roboters 2-1 unterbricht, nachdem Bremsen des Roboters 2-1 geschlossen worden sind, wie durch den punktierten Pfeil in Fig. 1 angedeutet. In diesem anderen Energiespar-Betriebsmodus wird somit ebenfalls weniger Energie verbraucht, während gleichzeitig Netzwerk-Controller 1-1.1, Ein-/Ausgabeeinrichtung 1-1.3, Lüfter 1-1.4, Steuerungs-CPU 1-1.5 für den Roboter 2-1 sowie Laufwerk 1-1.6 durch das Netzteil 1-1.2 mit der externen Stromversorgung 4-1 verbunden bleiben und so eine Sicherheits-Steuerung aufrechterhalten können.

Im Übrigen entspricht die Abwandlung dem vorstehend beschriebenen Ausführungsbeispiel, wobei lediglich der Energiespar- oder Hybernate-Betriebsmodus "H", in dem die Energieversorgung der Ein-/Ausgabeeinrichtung 1-1.3, des Lüfters 1-1.4, der Steuerungs-CPU 1-1.5 für den Roboter 2-1 sowie des Laufwerks 1-1.6 durch das Netzteil 1-1.2 unterbrochen ist, durch den anderen Energiespar-Betriebsmodus ersetzt zu denken ist, in dem der Netzwerk-Controller 1-1.1 nur die Energieversorgung der Antriebe des Roboters 2-1 unterbricht. In einer weiteren, ebenfalls nicht separat dargestellten Abwandlung sind die beiden vorstehend beschriebenen Ausführungsformen kombiniert, so dass durch Versenden des Magic Packets I-1 in den Hybernate-Betriebsmodus gewechselt wird, durch Versenden des anderen ersten Datenpaket in Form eines Magic Packets, das den hexadezimalen Wert "EE" enthält, in den anderen Energiespar-Betriebsmodus mit abgetrennten Antrieben.

### Bezugszeichenliste

- 1-1, 1-2: Robotersteuerung
- 1-1.1, 1-2.1: Netzwerk-Controller
- 1-1.2, 1-2.2: Netzteil
- 1-1.3, 1-2.3: Ein-/Ausgabeeinrichtung
- 1-1.4, 1-2.4: Lüfter
- 1-1.5, 1-2.5: Roboter-Steuerungs-CPU
- 1-1.6, 1-2.6: Laufwerk
- 2-1, 2-2: Roboter
- 3: Ethernet
- 4-1, 4-2: externes Energieversorgungsnetz

- I-1, II-1: Magic Packet
- A: aktiver Betriebsmodus
- H: Hybernate-Betriebsmodus
- 0: komplett von externer Energieversorgung getrennter Betriebsmodus

## Patentansprüche

1. Verfahren zum Wechsel des Betriebsmodus wenigstens einer Robotersteuerung (1-1) einer Mehrzahl von miteinander vernetzten Robotersteuerungen (1-1, 1-2) mit den Schritten:
- Versenden eines ersten Datenpaketes (I-1) über ein Netzwerk (3) der miteinander vernetzten Robotersteuerungen (1-1, 1-2);
- Empfangen des ersten Datenpaketes (I-1) durch eine Empfangseinrichtung (1-1.1) wenigstens einer Robotersteuerung; und
- Wechseln dieser Robotersteuerung von einem ersten Betriebsmodus (A) in einen zweiten Betriebsmodus (H) auf Basis des empfangenen ersten Datenpaketes (I-1), sofern das erste Datenpaket (I-1) an diese Robotersteuerung adressiert ist, wobei in dem ersten Betriebsmodus und dem zweiten Betriebsmodus unterschiedliche Gruppen von Komponenten (1.1-1, 1-1.3, 1-1.4, 1-1.5, 1-1.6) der Robotersteuerung (1-1) mit Energie versorgt werden, wobei
- einer von dem ersten und dem zweiten Betriebsmodus ein Energiesparmodus (H) der Robotersteuerung ist, in dem die Empfangseinrichtung (1-1.1) mit Energie versorgt wird und eine Gruppe von Komponenten (1-1.3, 1-1.4, 1-1.5, 1-1.6) der Robotersteuerung nicht mit Energie versorgt wird,
**dadurch gekennzeichnet, dass**
die Robotersteuerung beim
Wechsel in den Energiesparmodus aktuelle Daten abspeichert und beim Wechsel aus dem Energiesparmodus auf diese abgespeicherten Daten zugreift;
wobei
- die Robotersteuerung bei Empfangen eines zweiten Datenpaketes (II-1), sofern das zweite Datenpaket (II-1) an diese Robotersteuerung adressiert ist, von dem zweiten Betriebsmodus (H) in den ersten Betriebsmodus (A) wechselt.

2. Verfahren nach Anspruch 1, **dadurch gekennzeichnet, dass** wenigstens eine der Mehrzahl miteinander vernetzter Robotersteuerungen (1-1, 1-2) PC-basiert ist.

3. Verfahren nach einem der vorhergehenden Ansprüche, **dadurch gekennzeichnet, dass** ein über das Netzwerk versandtes Datenpaket ein Paket (I-1) zum Aktivieren eines Energiesparmodus (H) oder ein Paket (II-1) zum Deaktivieren eines Energiesparmodus (H), insbesondere ein Wake on LAN-Paket ist.

4. Verfahren nach einem der vorhergehenden Ansprüche, **dadurch gekennzeichnet, dass** in dem Energiesparmodus wenigstens eine Bremse einer von der Robotersteuerung gesteuerten automatisierten Industrieanlage geschlossen ist und/oder wenigstens ein Verbraucher dieser Industrieanlage nicht mit Energie versorgt wird.

5. Verfahren nach einem der vorhergehenden Ansprüche, **dadurch gekennzeichnet, dass** ein Datenpaket (I-1, II-1) direkt an eine Robotersteuerung (1-1) oder eine Gruppe (1-1) von Robotersteuerungen oder als Broadcast an alle miteinander vernetzten Robotersteuerungen adressiert wird.

6. Verfahren nach einem der vorhergehenden Ansprüche, **dadurch gekennzeichnet, dass** ein Datenpaket von einer Gruppensteuerung, insbesondere einer Linien-SPS, oder einer Robotersteuerung der miteinander vernetzten Robotersteuerungen gesendet wird.

7. Verfahren nach einem der vorhergehenden Ansprüche, **dadurch gekennzeichnet, dass** das Netzwerk (3) Ethernet-basiert, insbesondere PROFINET- oder auf einem anderen Industriellen Ethernet Standard für die Automatisierung basiert ist.

8. Verfahren nach einem der vorhergehenden Ansprüche, **dadurch gekennzeichnet, dass** eine Robotersteuerung bei Verbinden der Empfangseinrichtung (1-1.1) mit einer externen Energieversorgung (4-1) in den ersten Betriebsmodus (A) wechselt.

9. Robotersteuerung (1-1; 1-2) für eine automatisierte Industrieanlage, mit einer Empfangseinrichtung (1-1.1; 1-2.1) zum Empfangen von Datenpaketen (I-1, II-1) über ein Netzwerk (3) miteinander vernetzter Robotersteuerungen (1-1, 1-2), wobei Robotersteuerung einen ersten und einen zweiten Betriebsmodus (A, H) einnehmen kann, wobei in dem ersten Betriebsmodus (A) und dem zweiten Betriebsmodus (H) unterschiedliche Gruppen von Komponenten (1-1.1, 1-1.3, 1-1.4, 1-1.5, 1-1.6) der Robotersteuerung mit Energie versorgt werden, **dadurch gekennzeichnet, dass** die Robotersteuerung zur Durchführung eines Verfahrens nach einem der vorhergehenden Ansprüche eingerichtet ist.

10. Computerprogramm, das ein Verfahren nach einem der Ansprüche 1 bis 8 ausführt, wenn es in einer Robotersteuerung nach Anspruch 9 abläuft.

11. Computerprogrammprodukt mit Programmcode, der auf einem maschinenlesbaren Träger gespeichert ist und ein Computerprogramm nach Anspruch 10 umfasst.

## Claims

1. A method of changing the mode of operation of at least one robot control unit (1-1) of a plurality of robot control units (1-1, 1-2) networked with one another, comprising the steps of:
- sending a first data packet (I-1) via a network (3) of the robot control units (1-1, 1-2) networked with one another;
- receiving the first data packet (I-1) by means of a receiving device (1-1.1) of at least one robot control unit; and
- switching this robot control unit over from a first mode of operation (A) to a second mode of operation (H) on the basis of the received first data packet (1-1), provided that the first data packet (I-1) is addressed to this robot control unit, wherein, in the first mode of operation and in the second mode of operation, different groups of components (1.1-1, 1-1.3, 1-1.4, 1-1.5, 1-1.6) of the robot control unit (1-1) are supplied with power, wherein
- one of the first and second modes of operation is a energy saving mode (H) of the robot control unit in which the receiving device (1-1.1) is supplied with power and a group of components (1-1.3, 1-1.4, 1-1.5, 1-1.6) of the robot control unit is not supplied with power,
**characterised in that**
- the robot control unit stores current data in the course of the switch-over to the energy saving mode and accesses this stored data in the course of the switch-over from the energy saving mode;
wherein
- the robot control unit switches over from the second mode of operation (H) to the first mode of operation (A) upon receipt of a second data packet (II-1), provided that the second data packet (II-1) is addressed to this robot control unit.

2. The method according to claim 1, **characterised in that** at least one of the plurality of robot control units (1-1, 1-2) networked with one another is PC-based.

3. The method according to any one of the preceding claims, **characterised in that** a data packet which is sent via the network is a packet (I-1) for activating an energy saving mode (H) or a packet (II-1) for deactivating an energy saving mode (H), in particular a Wake on LAN packet.

4. The method according to any one of the preceding claims, **characterised in that**, in the energy saving mode, at least one brake of an automated industrial installation which is controlled by the robot control unit is closed and/or at least one consumer of this industrial installation is not supplied with power.

5. The method according to any one of the preceding claims, **characterised in that** a data packet (I-1, II-1) is addressed directly to a robot control unit (1-1) or a group (1-1) of robot control units or is addressed, as a broadcast, to all robot control units networked with one another.

6. The method according to any one of the preceding claims, **characterised in that** a data packet is sent by a group control unit, in particular a line PLC, or by a robot control unit of the robot control units networked with one another.

7. The method according to any one of the preceding claims, **characterised in that** the network (3) is Ethernet-based, in particular PROFINET-based or based on another industrial Ethernet standard for automation.

8. The method according to any one of the preceding claims, **characterised in that** a robot control unit switches over to the first mode of operation (A) when the receiving device (1-1.1) is connected to an external power supply (4-1).

9. A robot control unit (1-1; 1-2) for an automated industrial installation, having a receiving device (1-1.1; 1-2.1) for receiving data packets (I-1, II-1) via a network (3) of robot control units (1-1, 1-2) networked with one another, wherein the robot control unit can be in a first and in a second mode of operation (A, H), wherein, in the first mode of operation (A) and in the second mode of operation (H), different groups of components (1-1.1, 1-1.3, 1-1.4, 1-1.5, 1-1.6) of the robot control unit are supplied with power, **characterised in that** the robot control unit is arranged to carry out a method according to any one of the preceding claims.

10. A computer program that carries out a method according to any one of the claims 1 to 8 when it is run in a robot control unit according to claim 9.

11. A computer program product having program code which is stored on a machine-readable carrier and comprising a computer program according to claim 10.

## Revendications

1. Procédé d'échange du mode de fonctionnement d'au moins une commande de robot (1-1) d'une pluralité de commandes de robot (1-1, 1-2) en réseau entre elles avec les étapes :
- l'envoi d'un premier paquet de données (I-1) par le biais d'un réseau (3) des commandes de robot (1-1, 1-2) en réseau entre elles ;
- la réception du premier paquet de données (I-1) par un dispositif de réception (1-1.1) au moins d'une commande de robot ; et
- le passage de cette commande de robot d'un premier mode de fonctionnement (A) dans un second mode de fonctionnement (H) sur la base du premier paquet de données reçu (I-1), dans la mesure où le premier paquet de données (I-1) est adressé à cette commande de robot, dans lequel dans le premier mode de fonctionnement et le second mode de fonctionnement, différents groupes de composants (1.1-1, 1-1.3, 1-1.4, 1-1.5, 1-1.6) de la commande de robot (1-1) sont alimentés en énergie, dans lequel
- un du premier et du second mode de fonctionnement est un mode d'économie d'énergie (H) de la commande de robot, dans lequel le dispositif de réception (1-1.1) est alimenté en énergie et un groupe de composants (1-1.3, 1-1.4, 1-1.5, 1-1.6) de la commande de robot n'est pas alimenté en énergie,
**caractérisé en ce que** la commande de robot enregistre des données actuelles lors du passage dans le mode d'économie d'énergie et accède lors du passage depuis le mode d'économie d'énergie à ces données enregistrées ;
dans lequel
- la commande de robot passe lors de la réception d'un second paquet de données (II-1) dans la mesure où le second paquet de données (II-1) est adressé à cette commande de robot, du second mode de fonctionnement (H) au premier mode de fonctionnement (A).

2. Procédé selon la revendication 1, **caractérisé en ce qu'**au moins une de la pluralité de commandes de robot (1-1, 1-2) en réseau entre elles est basée sur le PC.

3. Procédé selon l'une des revendications précédentes, **caractérisé en ce qu'**un paquet de données envoyé par le biais du réseau est un paquet (I-1) destiné à l'activation d'un mode d'économie d'énergie (H) ou un paquet (II-1) destiné à la désactivation d'un mode d'économie d'énergie (H), en particulier un Wake ou un paquet LAN.

4. Procédé selon l'une des revendications précédentes, **caractérisé en ce que** dans le mode d'économie d'énergie au moins un frein d'une installation industrielle automatisée commandée par la commande de robot est fermé et/ou au moins un consommateur de cette installation industrielle n'est pas alimenté en énergie.

5. Procédé selon l'une des revendications précédentes, **caractérisé en ce qu'**un paquet de données (I-1, II-1) est adressé directement à une commande de robot (1-1) ou à un groupe (1-1) de commandes de robot ou comme multidiffusion à toutes les commandes de robot en réseau entre elles.

6. Procédé selon l'une des revendications précédentes, **caractérisé en ce qu'**un paquet de données est envoyé par une commande groupée, en particulier un SPS en ligne, ou une commande de robot des commandes de robot en réseau entre elles.

7. Procédé selon l'une des revendications précédentes, **caractérisé en ce que** le réseau (3) est basé sur Ethernet, en particulier une norme PROFINET ou sur une autre norme Ethernet industrielle pour l'automatisation.

8. Procédé selon l'une des revendications précédentes, **caractérisé en ce qu'**une commande de robot passe lors de la liaison du dispositif de réception (1-1.1) avec une alimentation en énergie externe (4-1) dans le premier mode de fonctionnement (A).

9. Commande de robot (1-1 ; 1-2) pour une installation industrielle automatisée, avec un dispositif de réception (1-1.1, 1-2.1) pour la réception de paquets de données (I-1, II-1) par le biais d'un réseau (3) de commandes de robot (1-1, 1-2) en réseau entre elles, dans laquelle la commande de robot peut occuper un premier et un second mode de fonctionnement (A, H), dans laquelle dans le premier mode de fonctionnement (A) et le second mode de fonctionnement (H) différents groupes de composants (1-1.1, 1-1.3, 1-1.4, 1-1.5, 1-1.6) de la commande de robot sont alimentés en énergie, **caractérisée en ce que** la commande de robot est aménagée pour la réalisation d'un procédé selon l'une des revendications précédentes.

10. Programme informatique qui réalise un procédé selon l'une des revendications 1 à 8, lorsqu'il se déroule dans une commande de robot selon la revendication 9.

11. Produit de programme informatique avec un code de programme qui est enregistré sur un support lisible sur machine et comporte un programme informatique selon la revendication 10.
